(19) Europäisches Patentamt
European Patent Office
Office européen des brevets

(11) **EP 4 790 160 A1**

(12) **EUROPEAN PATENT APPLICATION**
published in accordance with Art. 153(4) EPC

(43) Date of publication:
**12.08.2026 Bulletin 2026/33**

(21) Application number: **23954810.0**

(22) Date of filing: **06.10.2023**

(51) International Patent Classification (IPC):
***C22C 19/00** (2006.01)* ***H01M 4/38** (2006.01)*

(52) Cooperative Patent Classification (CPC):
**C22C 19/00; H01M 4/38;** Y02E 60/10

(86) International application number:
**PCT/JP2023/036481**

(87) International publication number:
**WO 2025/074601 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FDK Corporation**
**Tokyo 108-8212 (JP)**

(72) Inventors:
- **OHATA, Shota**
  **Tokyo 108-8212 (JP)**
- **SAGUCHI, Akira**
  **Tokyo 108-8212 (JP)**
- **SHUTO, Mizuki**
  **Tokyo 108-8212 (JP)**
- **ISHIDA, Jun**
  **Tokyo 108-8212 (JP)**
- **KIHARA, Masaru**
  **Tokyo 108-8212 (JP)**

(74) Representative: **Hoefer & Partner Patentanwälte mbB**
**Pilgersheimer Straße 20**
**81543 München (DE)**

(54) **HYDROGEN STORAGE ALLOY, NEGATIVE ELECTRODE COMPRISING SAID HYDROGEN STORAGE ALLOY, AND NICKEL HYDROGEN SECONDARY BATTERY COMPRISING SAID NEGATIVE ELECTRODE**

(57) A nickel hydrogen secondary battery 2 includes an outer can 10 and an electrode group 22 housed in the outer can 10 together with an alkaline electrolyte solution. The electrode group 22 includes a positive electrode 24 and a negative electrode 26 overlapped with each other via a separator 28. The negative electrode 26 is a hydrogen storage alloy represented by a general formula: $Ln_{1-a}Mg_aNi_{b-c}Al_c$ (where Ln represents one or more elements selected from rare earth elements, Y, and Zr, and subscripts a, b, and c satisfy relationships of $a \leq 0.30$, $3.4 \leq b \leq 3.7$, and $c \leq 0.25$, respectively), in which at least La among the rare earth elements is selected as Ln, and the La accounts for 89.0 mol% or more of the Ln.

*FIG. 1*

18
20
11
2
14
37
12
16
30
32
39
22
10
34
35
26
28
24

EP 4 790 160 A1

## Description

### TECHNICAL FIELD

The present invention relates to a hydrogen storage alloy, a negative electrode containing the hydrogen storage alloy, and a nickel hydrogen secondary battery including the negative electrode.

### BACKGROUND ART

A nickel hydrogen secondary battery is known as a kind of alkaline secondary battery. The nickel hydrogen secondary battery is used in various fields because of their high capacity and excellent environmental safety as compared with nickel-cadmium secondary batteries, and are attracting attention particularly in the field of automobiles.

As the nickel hydrogen secondary battery used in the field of automobiles, a nickel hydrogen secondary battery having a high capacity, a long cycle life, and an excellent capacity recovery rate after storage in a high-temperature environment is required. Many studies have been made to obtain such a nickel hydrogen secondary battery, and for example, a nickel hydrogen secondary battery as shown in Patent Literature 1 has been researched and developed. The nickel hydrogen secondary battery as shown in Patent Literature 1 has a high capacity and is excellent in cycle life characteristics and high-temperature storage characteristics.

### CITATION LIST

### PATENT LITERATURE

Patent Literature 1: JP2001-307721A

### SUMMARY OF INVENTION

### TECHNICAL PROBLEM

In this case, an environmental temperature at which a nickel hydrogen secondary battery used in the field of automobiles is used is wide. For example, a nickel hydrogen secondary battery may be used in a room temperature environment at 18°C to 28°C, in a high-temperature environment exceeding 28°C, or in a low-temperature environment at a temperature lower than 18°C. Specifically, an inside of an automobile may be in a high-temperature environment exceeding 50°C in the scorching heat of midsummer, and may be in a low-temperature environment below the freezing point in midwinter.

In the nickel hydrogen secondary battery stored in the high-temperature environment as described above, corrosion of the hydrogen storage alloy by an alkaline electrolyte solution (high-concentration alkaline aqueous solution) in the battery proceeds. When the corrosion proceeds in this way, a passive film is formed on a surface of the hydrogen storage alloy. When the passive film is formed as described above, a discharge reaction is inhibited, and discharge characteristics deteriorate. In particular, the discharge characteristics in a low-temperature environment (hereinafter, also referred to as low-temperature discharge characteristics) significantly deteriorate. That is, the nickel hydrogen secondary battery has a problem that the low-temperature discharge characteristics after being stored in a high-temperature environment significantly deteriorate.

Although the nickel hydrogen secondary battery as described in Patent Literature 1 has improved high-temperature storage characteristics, no consideration has been made on the problem in the case of use in a low-temperature environment after storage in a high-temperature environment.

The nickel hydrogen secondary battery is required to have a capability of stably supplying electric power in a temperature range as wide as possible. Therefore, it is desired to develop a nickel hydrogen secondary battery having both excellent high-temperature storage characteristics and excellent low-temperature discharge characteristics.

The present invention has been made in view of the above circumstances, and an object of the present invention is to provide a hydrogen storage alloy that contributes to exhibiting excellent discharge characteristics even when a nickel hydrogen secondary battery is stored in a high-temperature environment and then placed in a low-temperature environment, a negative electrode containing the hydrogen storage alloy, and a nickel hydrogen secondary battery including the negative electrode.

### SOLUTION TO PROBLEM

According to the present invention, there is provided a hydrogen storage alloy. The hydrogen storage alloy is

represented by a general formula: $Ln_{1-a}Mg_aNi_{b-c}Al_c$ (where Ln represents one or more elements selected from rare earth elements, Y, and Zr, and subscripts a, b, and c satisfy relationships of $a \leq 0.30$, $3.4 \leq b \leq 3.7$, and $c \leq 0.25$, respectively). In the hydrogen storage alloy, at least La among the rare earth elements is selected as the Ln, and the La accounts for 89.0 mol% or more of the Ln.

ADVANTAGEOUS EFFECTS OF INVENTION

The hydrogen storage alloy of the present invention is a hydrogen storage alloy represented by the general formula: $Ln_{1-a}Mg_aNi_{b-c}Al_c$ (where Ln represents one or more elements selected from rare earth elements, Y, and Zr, and subscripts a, b, and c satisfy relationships of $a \leq 0.30$, $3.4 \leq b \leq 3.7$, and $c \leq 0.25$, respectively). In the hydrogen storage alloy, at least La among the rare earth elements is selected as the Ln, and the La accounts for 89.0 mol% or more of the Ln. With this configuration, the hydrogen storage alloy of the present invention is hardly corroded by the alkaline electrolyte solution even when placed in a high-temperature environment, and the formation of the passive film can be reduced. Therefore, a nickel hydrogen secondary battery in which a negative electrode containing the hydrogen storage alloy of the present invention is incorporated exhibits excellent discharge characteristics even when the battery is stored in a high-temperature environment and then placed in a low-temperature environment. That is, the present invention can provide a hydrogen storage alloy that contributes to exhibiting excellent discharge characteristics even when a nickel hydrogen secondary battery is stored in a high-temperature environment and then placed in a low-temperature environment, a negative electrode containing the hydrogen storage alloy, and a nickel hydrogen secondary battery including the negative electrode.

BRIEF DESCRIPTION OF DRAWINGS

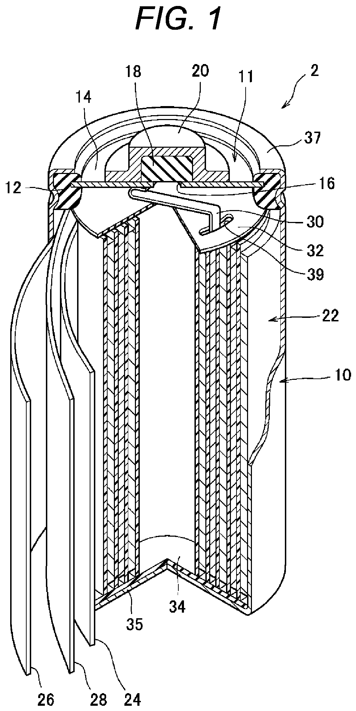

[FIG. 1] FIG. 1 is a perspective view illustrating a partially fractured nickel hydrogen secondary battery according to an embodiment.

DESCRIPTION OF EMBODIMENTS

Hereinafter, an embodiment will be described using a cylindrical nickel hydrogen secondary battery (hereinafter, referred to as a battery) 2 having an AA size as illustrated in FIG. 1 as an example.

As illustrated in FIG. 1, the battery 2 includes an outer can 10 in the shape of a closed-end cylinder having an open upper end. The outer can 10 has conductivity, and a bottom wall 35 of the outer can 10 functions as a negative electrode terminal. A sealing body 11 is fixed to an opening of the outer can 10. The sealing body 11 includes a lid plate 14 and a positive electrode terminal 20. The sealing body 11 seals the outer can 10 and provides the positive electrode terminal 20. The lid plate 14 is a disc-shaped member having conductivity. The lid plate 14 and a ring-shaped insulating packing material 12 surrounding the lid plate 14 are placed inside the opening of the outer can 10. The insulating packing material 12 is fixed to an opening edge 37 of the outer can 10 by caulking of the opening edge 37 of the outer can 10. That is, the lid plate 14 and the insulating packing material 12 work in unison to airtightly close the opening of the outer can 10.

In this case, the lid plate 14 has a central through hole 16 in the center. A valve disc 18 made of rubber is placed on an external surface of the lid plate 14 to close the central through hole 16. Further, the metal positive electrode terminal 20 having a cylindrical shape with a flange is electrically connected to the external surface of the lid plate 14 so as to cover the valve disc 18. The positive electrode terminal 20 presses the valve disc 18 toward the lid plate 14. A gas drainage hole not illustrated is provided in the positive electrode terminal 20.

The central through hole 16 is airtightly closed by the valve disc 18 under normal conditions. When gas is generated inside the outer can 10 and the internal pressure is increased thereby, the valve disc 18 is compressed by the internal pressure and the central through hole 16 is opened. As a result, the gas is released out of the outer can 10 through the central through hole 16 and the gas drainage hole (not illustrated) of the positive electrode terminal 20. That is, the central through hole 16, the valve disc 18, and the positive electrode terminal 20 form a relief valve for the battery 2.

An electrode group 22 is housed in the outer can 10. The electrode group 22 includes a strip-shaped positive electrode 24, a strip-shaped negative electrode 26, and a strip-shaped separator 28. Specifically, the positive electrode 24 and the negative electrode 26 are spirally wound with the separator 28 interposed therebetween. In short, the positive electrode 24 and the negative electrode 26 are overlapped with each other via the separator 28. An outermost periphery of the electrode group 22 is formed by a part (outermost peripheral portion) of the negative electrode 26, and comes into contact with an inner peripheral wall of the outer can 10. That is, the negative electrode 26 and the outer can 10 are electrically connected to each other.

In the outer can 10, a positive electrode lead 30 is placed between an end of the electrode group 22 and the lid plate 14. Specifically, one end of the positive electrode lead 30 is connected to the positive electrode 24, and the other end thereof is connected to the lid plate 14. Therefore, the positive electrode terminal 20 and the positive electrode 24 are

electrically connected to each other via the positive electrode lead 30 and the lid plate 14. A circular upper insulating member 32 is placed between the lid plate 14 and the electrode group 22, and the positive electrode lead 30 extends through a slit 39 provided in the upper insulating member 32. A circular lower insulating member 34 is also placed between the electrode group 22 and a bottom portion of the outer can 10.

Further, a predetermined amount of an alkaline electrolyte solution (not illustrated) is injected into the outer can 10. The alkaline electrolyte solution causes the electrode group 22 to be impregnated therein, and causes a charge/-discharge reaction to proceed between the positive electrode 24 and the negative electrode 26. As the alkaline electrolyte solution, an alkaline aqueous solution containing KOH, NaOH, LiOH, or the like as a solute is preferably used.

As the material of the separator 28, for example, a nonwoven fabric made of polyamide fibers to which hydrophilic functional groups are imparted, or a nonwoven fabric made of polyolefin fibers such as polyethylene or polypropylene to which hydrophilic functional groups are imparted may be used. Specifically, it is preferable to use a nonwoven fabric mainly composed of polyolefin fibers to which sulfone groups are imparted by being subjected to a sulfonation treatment. In this case, the sulfone group is imparted by treating the nonwoven fabric with an acid containing a sulfate group, such as sulfuric acid or fuming sulfuric acid. A battery using a separator containing such a fiber having a sulfone group exhibits excellent self-discharge resistance characteristics.

The positive electrode 24 includes a conductive positive electrode substrate having a porous structure and a positive electrode mixture held in pores of the positive electrode substrate.

As the positive electrode substrate as described above, for example, a mesh-like, sponge-like, or fibrous metal body plated with nickel, or foamed nickel may be used.

The positive electrode mixture contains a positive electrode active material, a conductive material, a positive electrode additive, and a binder. The binder functions to bind the positive electrode active material, the conductive material, and the positive electrode additive, and bind the positive electrode mixture to the positive electrode substrate. Here, as the binder, for example, carboxymethyl cellulose, methyl cellulose, a PTFE (polytetrafluoroethylene) dispersion, and an HPC (hydroxypropyl cellulose) dispersion can be used.

The positive electrode active material particles are nickel hydroxide particles or higher order nickel hydroxide particles. At least one of zinc, magnesium, and cobalt is preferably solid-dissolved in the nickel hydroxide particles.

As the conductive material, for example, one or more selected from a cobalt compound and cobalt (Co) can be used. Examples of the cobalt compound include cobalt oxide (CoO) and cobalt hydroxide ($Co(OH)_2$). The conductive material is added to the positive electrode mixture as necessary, and may be contained in the positive electrode mixture in the form of a coating layer covering the surface of the positive electrode active material in addition to the form of powder.

The positive electrode additive is added to improve the characteristics of the positive electrode, and for example, yttrium oxide, zinc oxide, or the like can be used.

The positive electrode 24 can be produced, for example, as follows.

First, a conductive material, a positive electrode additive, water, and a binder are added to a positive electrode active material powder which is an aggregate of the positive electrode active material particles as described above, and kneaded to prepare a positive electrode mixture slurry. For example, foamed nickel is filled with the obtained positive electrode mixture slurry, and a drying treatment is performed. After drying, the foamed nickel filled with the nickel hydroxide particles and the like is rolled and pressed, and then cut. Accordingly, the positive electrode 24 carrying the positive electrode mixture is obtained.

Next, the negative electrode 26 will be described.

The negative electrode 26 has a strip-shaped conductive negative electrode core, and a negative electrode mixture is held on the negative electrode core.

The negative electrode core is a sheet-shaped metal material in which through holes are distributed, and for example, a punching metal sheet can be used. The negative electrode mixture is not only placed in the through holes of the negative electrode core, but also held in layers on both surfaces of the negative electrode core.

The negative electrode mixture contains particles of a hydrogen storage alloy capable of storing and releasing hydrogen as a negative electrode active material, a conductive material, and a binder. The binder functions to bind the particles of the hydrogen storage alloy, the negative electrode additive, and the conductive material to one another, and to simultaneously bind the negative electrode mixture to the negative electrode core. Here, a hydrophilic or hydrophobic polymer or the like can be used as the binder, and carbon black or graphite can be used as the conductive material. In addition, a negative electrode additive may be added as necessary.

As the hydrogen storage alloy according to the present embodiment, a rare earth-Mg-Ni-based hydrogen storage alloy containing a rare earth element, Mg, and Ni is used. Specifically, a hydrogen storage alloy having a composition represented by the following general formula (I) is used as the rare earth-Mg-Ni-based hydrogen storage alloy.

$$Ln_{1-a}Mg_aNi_{b-c}Al_c \cdots \quad (I)$$

In this case, in the general formula (I), Ln represents one or more elements selected from rare earth elements, Y,

and Zr, and subscripts a, b, and c satisfy relationships of $a \leq 0.30$, $3.4 \leq b \leq 3.7$, and $c \leq 0.25$, respectively. In this case, the rare earth elements specifically refer to La, Ce, Pr, Nd, Pm, Sm, Eu, Gd, Tb, Dy, Ho, Er, Tm, Yb, Lu, Sc, and Y.

Here, as described above, when the subscripts a, b, and c are out of a range in which a representing an element ratio of Mg is 0.30 or less, b representing an element ratio of Ni is 3.4 or more and 3.7 or less, and c representing an element ratio of Al is 0.25 or less, the obtained hydrogen storage alloy cannot be applied to a negative electrode for a nickel hydrogen secondary battery because an amount of hydrogen that can be stored is reduced or the equilibrium pressure during hydrogen storage and hydrogen release of the hydrogen storage alloy increases. Therefore, the subscripts a, b, and c are set within the above-described ranges.

Further, in the above-described Ln, at least La is selected from the rare earth elements. The content of La is 89.0 mol% or more of Ln. As described above, when 89.0 mol% or more of La is contained in Ln, the effect of inhibiting corrosion of the surface of the hydrogen storage alloy and preventing the occurrence of a passive film is obtained. Therefore, the nickel hydrogen secondary battery including the hydrogen storage alloy of the present embodiment in the negative electrode has an effect of inhibiting deterioration in low-temperature discharge characteristics after being stored in a high-temperature environment.

In addition, in the pressure-composition-temperature characteristics of the hydrogen storage alloy showing a relationship among a hydrogen storage amount represented by H/M, which is a ratio of the number H of atoms of hydrogen in the hydrogen storage alloy to the total number M of atoms of elements constituting the hydrogen storage alloy, a hydrogen storage pressure (Pa) which is an equilibrium hydrogen pressure in a hydrogen storage process, and a hydrogen release pressure (Pd) which is an equilibrium hydrogen pressure in a hydrogen release process under a temperature condition of 80°C, it is preferable to use, as the hydrogen storage alloy according to the present embodiment, a hydrogen storage alloy having a hydrogen storage pressure of 0.07 MPa or more and a hydrogen release pressure of 0.04 MPa or more at a time point when the above-described H/M becomes 0.4. When the hydrogen storage alloy has a hydrogen storage pressure of 0.07 MPa or more and a hydrogen release pressure of 0.04 MPa or more at the time point when H/M becomes 0.4, the above-described effects are more remarkably exhibited.

In this case, when the hydrogen storage pressure at the time point when H/M becomes 0.4 is less than 0.07 MPa and the hydrogen release pressure at the time point when H/M becomes 0.4 is less than 0.04 MPa, it is difficult to sufficiently obtain the above-described effects. On the other hand, when the hydrogen storage pressure and the hydrogen release pressure at the time point when H/M becomes 0.4 exceed 0.9 MPa, the internal pressure of the sealed nickel hydrogen secondary battery is too high during charging, and the leakage of the alkaline electrolyte solution easily occurs. Therefore, the hydrogen storage pressure (Pa) at the time point when H/M becomes 0.4 is preferably in the range of 0.07 [MPa] < Pa < 0.9 [MPa], and the hydrogen release pressure (Pd) is preferably in the range of 0.04 [MPa] < Pa < 0.9 [MPa].

The particles of the above-described hydrogen storage alloy are obtained, for example, as follows.

First, metal raw materials are weighed and mixed so as to have a predetermined composition, and the mixture is melted in, for example, an induction melting furnace and then cooled to form an ingot. The obtained ingot is subjected to a heat treatment in which the ingot is held at 900°C to 1200°C for 5 hours to 24 hours in an inert gas atmosphere. Thereafter, the ingot cooled to room temperature is mechanically pulverized in an inert gas atmosphere and sieved to obtain hydrogen storage alloy particles having a desired particle diameter.

Next, the negative electrode 26 can be produced, for example, as follows.

First, the hydrogen storage alloy powder, which is an aggregate of particles of hydrogen storage alloy, the conductive material, the binder, and water are kneaded to prepare a negative electrode mixture paste. The obtained negative electrode mixture paste is applied to a negative electrode core and dried. After drying, the negative electrode core to which the hydrogen storage alloy particles and the like adhere is rolled and pressed, and cut. Accordingly, the negative electrode 26 is obtained.

The positive electrode 24 and the negative electrode 26 obtained as described above are spirally wound with the separator 28 interposed therebetween, and accordingly, the electrode group 22 is formed.

The electrode group 22 thus obtained is housed in the outer can 10. Subsequently, a predetermined amount of alkaline electrolyte solution is injected into the outer can 10. Thereafter, the outer can 10 containing the electrode group 22 and the alkaline electrolyte solution is sealed with the lid plate 14 provided with the positive electrode terminal 20 to obtain the battery 2. The obtained battery 2 is subjected to an initial activation treatment and is in a usable state.

[Examples]

1. Battery Production

(Example 1)

(1) Production of Hydrogen Storage Alloy and Negative Electrode

First, La, Mg, Ni, and Al were weighed to prepare a mixture having a molar ratio of 0.763:0.237:3.30:0.10. The obtained mixture was melted in an induction melting furnace, and the molten metal was poured into a mold and then cooled to room temperature (25°C), thereby obtaining an ingot of a hydrogen storage alloy.

Next, a container was filled with the obtained ingot, the inside of the container was gas-replaced with argon, and then the container was sealed. The container was placed in a heat treatment furnace and held at a temperature of 950°C for 10 hours to subject the ingot to a heat treatment in an argon gas atmosphere. After the heat treatment, the ingot of the hydrogen storage alloy cooled to room temperature was mechanically pulverized in an argon gas atmosphere to obtain a hydrogen storage alloy powder which was an aggregate of particles of the hydrogen storage alloy. Here, as a result of measuring the particle diameter of particles of the obtained hydrogen storage alloy powder using a laser diffraction/-scattering particle diameter distribution measuring device, a mean volume diameter (MV) of the hydrogen storage alloy particles was 25 μm.

A sample collected from the obtained hydrogen storage alloy powder was subjected to composition analysis (hereinafter, also referred to as ICP analysis) by high-frequency inductively coupled plasma atomic emission spectroscopy (ICP-AES). As a result, the composition of the hydrogen storage alloy was $La_{0.763}Mg_{0.237}Ni_{3.30}Al_{0.10}$. In addition, the mol% of each element constituting the hydrogen storage alloy in the hydrogen storage alloy was determined. The obtained results are illustrated in Table 1.

Further, the ratio (mol%) of La in Ln of the general formula (I) showing the composition of the hydrogen storage alloy was determined, and the results are illustrated in Table 2.

Further, evaluations of PCT (pressure-composition-temperature) characteristics were performed for samples collected from the obtained hydrogen storage alloy powder. Specifically, the evaluations are as follows.

The hydrogen storage alloy powder was set in a PCT characteristic evaluation device. Then, the hydrogen storage alloy constituting the hydrogen storage alloy powder was hydrogenated under a temperature condition of 80°C until the maximum hydrogen pressure reached 1 MPa, and then was dehydrogenated to activate the hydrogen storage alloy. The activated hydrogen storage alloy was hydrogenated again under a temperature condition of 80°C until the maximum hydrogen pressure reached 1 MPa. At this time, the equilibrium hydrogen pressure during hydrogen storage was measured. Then, the equilibrium hydrogen pressure at the time point when H/M = 0.4 was determined as the hydrogen storage pressure (Pa). Subsequently, the hydrogenated hydrogen storage alloy was dehydrogenated under a temperature condition of 80°C, and an equilibrium hydrogen pressure during hydrogen release was measured. Then, the equilibrium hydrogen pressure at the time point when H/M = 0.4 was determined as the hydrogen release pressure (Pd). The obtained hydrogen storage pressure (Pa) and hydrogen release pressure (Pd) are illustrated in Table 2.

Next, 0.4 parts by weight of sodium polyacrylate, 0.1 parts by weight of carboxymethyl cellulose, 1.0 part by weight of a dispersion of styrene butadiene rubber (SBR) having a solid content of 50%, 0.5 parts by weight of carbon black (hollow carbon black in which primary particles have a hollow shell structure, specifically, Ketjenblack (registered trademark) manufactured by Lion Specialty Chemicals Co., Ltd.), 0.5 parts by weight of yttrium oxide, and 30 parts by weight of water were added to 100 parts by weight of the hydrogen storage alloy powder obtained as described above and kneaded to prepare a paste of a negative electrode mixture.

The paste of the negative electrode mixture was uniformly applied to both surfaces of an iron perforated plate as a negative electrode core so as to have a constant thickness. The perforated plate had a thickness of 60 μm, and a surface thereof was plated with nickel.

After drying the paste, the perforated plate to which the hydrogen storage alloy powder adhered was further rolled and pressed to increase the amount of the alloy per volume, and then cut to obtain the negative electrode 26 for the AA size.

(2) Production of Positive Electrode Active Material and Positive Electrode

Nickel sulfate, zinc sulfate, magnesium sulfate, and cobalt sulfate were weighed such that zinc was 3.0 wt%, magnesium was 0.4 wt%, and cobalt was 1.0 wt% with respect to nickel, and these compounds were added to a 1N sodium hydroxide aqueous solution containing ammonium ions to prepare a mixed aqueous solution. While stirring the obtained mixed aqueous solution, a 10N sodium hydroxide aqueous solution was gradually added to the mixed aqueous solution to cause a reaction, and the pH during the reaction was stabilized to 13 to 14 to generate nickel hydroxide particles containing nickel hydroxide as a main component and having zinc, magnesium, and cobalt solid-dissolved therein. The obtained nickel hydroxide particles were washed three times with 10 times the amount of pure water, and then subjected to a dehydration step and a drying step to obtain a positive electrode active material powder which is an aggregate of nickel hydroxide particles. Here, as a result of measuring the particle diameter of the particles of the obtained positive electrode active material powder using a laser diffraction/scattering particle diameter distribution measuring device, a mean volume diameter (MV) of the positive electrode active material particles was 10 μm.

Next, 10 parts by weight of cobalt hydroxide, 0.5 parts by weight of yttrium oxide, 40 parts by weight of HPC

(hydroxypropyl cellulose) dispersion liquid, 0.3 parts by weight of zinc oxide, and 30 parts by weight of water were mixed with 100 parts by weight of the positive electrode active material powder to prepare a positive electrode mixture slurry, and a sheet-shaped foamed nickel as a positive electrode substrate was filled with the positive electrode mixture slurry. After the positive electrode mixture slurry was dried, the foamed nickel filled with the positive electrode mixture was rolled and pressed, and then cut into a predetermined shape to obtain a positive electrode 24 for the AA size.

(3) Assembly of Nickel Hydrogen Secondary Battery

The obtained positive electrode 24 and negative electrode 26 were spirally wound with the separator 28 interposed therebetween to produce the electrode group 22. In this case, the separator 28 used for the production of the electrode group 22 was made of a sulfonated polypropylene fiber nonwoven fabric, and had a thickness of 0.1 mm (basis weight: 53 $g/m^2$).

On the other hand, an aqueous solution containing KOH and LiOH was prepared as an alkaline electrolyte solution. In this case, the alkaline electrolyte solution contains KOH and LiOH at a ratio of KOH:LiOH = 7.0N:1.0N.

Next, the above-described electrode group 22 was housed in the bottomed cylindrical outer can 10, and a predetermined amount of the prepared alkaline electrolyte solution was injected. Thereafter, the opening of the outer can 10 is closed with the sealing body 11 to assemble the AA-size nickel hydrogen secondary battery 2 having a nominal capacity of 1000 mAh. In this case, the nominal capacity was defined as the discharge capacity of a battery when the battery was charged at 0.1 A for 16 hours in an environment at a temperature of 25°C and then discharged at 0.2 A until the battery voltage reached 1.0 V.

(4) Initial Activation Treatment

An initial activation treatment was performed on the battery 2 by repeating, five times, a charging and discharging operation in which the battery 2 was charged at 0.1 A for 16 hours in an environment at a temperature of 25°C and then discharged at 0.2 A until the battery voltage reached 1.0 V. In this way, the battery 2 was brought into a usable state.

(Example 2)

A nickel hydrogen secondary battery was assembled in the same manner as in Example 1 except that a hydrogen storage alloy was produced by weighing La, Sm, Zr, Mg, Ni, and Al and preparing a mixture in which the molar ratio of these elements was 0.675:0.067:0.008:0.25:3.47:0.10.

In this case, as a result of the ICP analysis of the hydrogen storage alloy of Example 2, the composition was $La_{0.675}Sm_{0.067}Zr_{0.008}Mg_{0.25}Ni_{3.47}Al_{0.10}$. In addition, the mol% of each element constituting the hydrogen storage alloy in the hydrogen storage alloy of Example 2 was determined. The obtained results are illustrated in Table 1.

Further, regarding the hydrogen storage alloy of Example 2, the ratio (mol%) of La in Ln, the hydrogen storage pressure (Pa), and the hydrogen release pressure (Pd) are illustrated in Table 2.

(Example 3)

A nickel hydrogen secondary battery was assembled in the same manner as in Example 1 except that a hydrogen storage alloy was prepared by weighing La, Sm, Zr, Mg, Ni, and Al and preparing a mixture in which the molar ratio of these elements was 0.72:0.072:0.008:0.20:3.47:0.10.

In this case, as a result of the ICP analysis of the hydrogen storage alloy of Example 3, the composition was $La_{0.72}Sm_{0.072}Zr_{0.008}Mg_{0.20}Ni_{3.47}Al_{0.10}$. In addition, the mol% of each element constituting the hydrogen storage alloy in the hydrogen storage alloy of Example 3 was determined. The obtained results are illustrated in Table 1.

Further, regarding the hydrogen storage alloy of Example 3, the ratio (mol%) of La in Ln, the hydrogen storage pressure (Pa), and the hydrogen release pressure (Pd) are illustrated in Table 2.

(Example 4)

A nickel hydrogen secondary battery was assembled in the same manner as in Example 1 except that a hydrogen storage alloy was produced by weighing La, Sm, Zr, Mg, Ni, and Al and preparing a mixture in which the molar ratio of these elements was 0.693:0.069:0.008:0.23:3.47:0.10.

In this case, as a result of the ICP analysis of the hydrogen storage alloy of Example 4, the composition was $La_{0.693}Sm_{0.069}Zr_{0.008}Mg_{0.23}Ni_{3.47}Al_{0.10}$. In addition, the mol% of each element constituting the hydrogen storage alloy in the hydrogen storage alloy of Example 4 was determined. The obtained results are illustrated in Table 1.

Further, regarding the hydrogen storage alloy of Example 4, the ratio (mol%) of La in Ln, the hydrogen storage

pressure (Pa), and the hydrogen release pressure (Pd) are illustrated in Table 2.

(Example 5)

A nickel hydrogen secondary battery was assembled in the same manner as in Example 1 except that a hydrogen storage alloy was produced by weighing La, Sm, Zr, Mg, Ni, and Al and preparing a mixture in which the molar ratio of these elements was 0.693:0.069:0.008:0.23:3.60:0.10.

In this case, as a result of the ICP analysis of the hydrogen storage alloy of Example 5, the composition was $La_{0.693}Sm_{0.069}Zr_{0.008}Mg_{0.23}Ni_{3.60}Al_{0.10}$. In addition, the mol% of each element constituting the hydrogen storage alloy in the hydrogen storage alloy of Example 5 was determined. The obtained results are illustrated in Table 1.

Further, regarding the hydrogen storage alloy of Example 5, the ratio (mol%) of La in Ln, the hydrogen storage pressure (Pa), and the hydrogen release pressure (Pd) are illustrated in Table 2.

(Comparative Example 1)

A nickel hydrogen secondary battery was assembled in the same manner as in Example 1 except that a hydrogen storage alloy was produced by measuring Nd, Zr, Mg, Ni, and Al and preparing a mixture in which the molar ratio of these elements was 0.88:0.01:0.110:3.23:0.17.

In this case, as a result of the ICP analysis of the hydrogen storage alloy of Comparative Example 1, the composition was $Nd_{0.88}Zr_{0.01}Mg_{0.110}Ni_{3.23}Al_{0.17}$. In addition, the mol% of each element constituting the hydrogen storage alloy in the hydrogen storage alloy of Comparative Example 1 was determined. The obtained results are illustrated in Table 1.

Further, regarding the hydrogen storage alloy of Comparative Example 1, the ratio (mol%) of La in Ln, the hydrogen storage pressure (Pa), and the hydrogen release pressure (Pd) are illustrated in Table 2.

(Comparative Example 2)

A nickel hydrogen secondary battery was assembled in the same manner as in Example 1 except that a hydrogen storage alloy was produced by weighing La, Sm, Zr, Mg, Ni, and Al and preparing a mixture in which the molar ratio of these elements was 0.269:0.619:0.009:0.103:3.23:0.17.

In this case, as a result of the ICP analysis of the hydrogen storage alloy of Comparative Example 2, the composition was $La_{0.269}Sm_{0.619}Zr_{0.009}Mg_{0.103}Ni_{3.23}Al_{0.17}$. In addition, the mol% of each element constituting the hydrogen storage alloy in the hydrogen storage alloy of Comparative Example 2 was determined. The obtained results are illustrated in Table 1.

Further, regarding the hydrogen storage alloy of Comparative Example 2, the ratio (mol%) of La in Ln, the hydrogen storage pressure (Pa), and the hydrogen release pressure (Pd) are illustrated in Table 2.

2. Evaluation of Nickel Hydrogen Secondary Battery

(1) Low-Temperature Discharge Characteristics

The produced batteries of Examples 1 to 5 and Comparative Examples 1 and 2 were charged with a charging current of 1.0 A in an environment at 25°C until the battery voltage reached the maximum value and then decreased by 5 mV. Thereafter, each battery was placed in an environment at -30°C and allowed to rest for 3 hours. Then, the battery after being allowed to rest for 3 hours was discharged under a constant power condition of 1.0 W similarly in an environment at -30°C until the battery voltage reached 0.6 V. The discharge capacity at this time was determined, and this discharge capacity was defined as the pre-storage capacity A [mAh] of the battery. The pre-storage capacity A is illustrated in Table 2.

In this case, the discharging under the constant power condition means discharging while adjusting the current value during discharging such that a value of the battery power [W] obtained by the following formula (II) is always a constant value.

$$\text{Battery power [W]} = \text{measured battery voltage value [V]} \times \text{measured current value} \quad \text{(II)}$$

Next, each battery after the pre-storage capacity A was determined was charged again with a charging current of 1.0 A in an environment at 25°C until the battery voltage reached the maximum value and then decreased by 5 mV. Thereafter, each battery was placed in an environment at 60°C and stored for 180 days in total. During this storage period, auxiliary charging was performed every 30 days of storage. As the conditions of this auxiliary charging, the battery after

storage for 30 days was once left in an environment at 25°C for 3 hours, and then charging was performed at a current value corresponding to 0.1 C until the battery was fully charged. The battery after the auxiliary charging was placed in the environment at 60°C and stored for the remaining days again.

Next, the battery for which the high-temperature storage for 180 days in total was completed was placed in an environment at -30°C and allowed to rest for 3 hours. Then, the battery after being allowed to rest for 3 hours was discharged under a constant power condition of 1.0 W similarly in an environment at -30°C until the battery voltage reached 0.6 V. The discharge capacity at this time was determined, and this discharge capacity was defined as the post-storage capacity B [mAh] of the battery.

Next, a ratio of low-temperature discharge capacity after the high-temperature storage to low-temperature discharge capacity before the high-temperature storage was determined by the following formula (III). This ratio was defined as the low-temperature discharge retention rate C [%] after the high-temperature storage and illustrated in Table 2. The larger the value of the low-temperature discharge retention rate C, the closer the discharge capacity under a low-temperature environment after storage in a high-temperature environment is to the discharge capacity under a low-temperature environment before storage in a high-temperature environment. That is, the larger the value of the low-temperature discharge retention rate C, the more the deterioration in the discharge characteristics after storage in a high-temperature environment is inhibited.

Low-temperature discharge retention rate C [%] after high-temperature storage = post-storage capacity B ÷ pre-storage capacity A × 100 (III)

[Table 1]

[Table 1]

| | Composition | La [mol%] | Sm [mol%] | Nd [mol%] |
|---|---|---|---|---|
| Example 1 | $La_{0.763}Mg_{0.237}Ni_{3.30}Al_{0.10}$ | 34.07 | - | - |
| Example 2 | $La_{0.675}Sm_{0.067}Zr_{0.008}Mg_{0.25}Ni_{3.47}Al_{0.10}$ | 29.89 | 3.24 | - |
| Example 3 | $La_{0.72}Sm_{0.072}Zr_{0.008}Mg_{0.20}Ni_{3.47}Al_{0.10}$ | 31.37 | 3.32 | - |
| Example 4 | $La_{0.693}Sm_{0.069}Zr_{0.008}Mg_{0.23}Ni_{3.47}Al_{0.10}$ | 30.13 | 3.25 | - |
| Example 5 | $La_{0.693}Sm_{0.069}Zr_{0.008}Mg_{0.23}Ni_{3.60}Al_{0.10}$ | 29.48 | 3.20 | - |
| Comparative Example 1 | $Nd_{0.88}Zr_{0.01}Mg_{0.110}Ni_{3.23}Al_{0.17}$ | 0.11 | - | 39.19 |
| Comparative Example 2 | $La_{0.269}Sm_{0.619}Zr_{0.009}Mg_{0.103}Ni_{3.23}Al_{0.17}$ | 11.19 | 27.84 | - |

[Table 1] continued

| | Composition | Zr [mol%] | Mg [mol%] | Ni [mol%] | Al [mol%] |
|---|---|---|---|---|---|
| Example 1 | $La_{0.763}Mg_{0.237}Ni_{3.30}Al_{0.10}$ | - | 2.05 | 62.08 | 0.89 |
| Example 2 | $La_{0.675}Sm_{0.067}Zr_{0.008}Mg_{0.25}Ni_{3.47}Al_{0.10}$ | 0.19 | 1.89 | 64.12 | 0.85 |
| Example 3 | $La_{0.72}Sm_{0.072}Zr_{0.008}Mg_{0.20}Ni_{3.47}Al_{0.10}$ | 0.22 | 1.49 | 62.88 | 0.84 |
| Example 4 | $La_{0.693}Sm_{0.069}Zr_{0.008}Mg_{0.23}Ni_{3.47}Al_{0.10}$ | 0.22 | 1.75 | 63.78 | 0.86 |
| Example 5 | $La_{0.693}Sm_{0.069}Zr_{0.008}$ | 0.21 | 1.79 | 64.45 | 0.85 |
| Comparative Example 1 | $Nd_{0.88}Zr_{0.01}Mg_{0.110}Ni_{3.23}Al_{0.17}$ | 0.24 | 0.81 | 57.94 | 1.43 |
| Comparative Example 2 | $La_{0.269}Sm_{0.619}Zr_{0.009}Mg_{0.103}Ni_{3.23}Al_{0.17}$ | 0.26 | 0.72 | 58.49 | 1.39 |

[Table 2]

[Table 2]

| | Composition | Ratio of La in Ln [mol%] | Hydrogen storage pressure (Pa) [MPa] | Hydrogen release pressure (Pd) [MPa] |
|---|---|---|---|---|
| Example 1 | $La_{0.763}Mg_{0.237}Ni_{3.30}Al_{0.10}$ | 100.0 | 0.069 | 0.036 |
| Example 2 | $La_{0.675}Sm_{0.067}Zr_{0.008}$ $Mg_{0.25}Ni_{3.47}Al_{0.10}$ | 89.9 | 0.162 | 0.096 |
| Example 3 | $La_{0.72}Sm_{0.072}Zr_{0.008}$ $Mg_{0.20}Ni_{3.47}Al_{0.10}$ | 90.0 | 0.079 | 0.041 |
| Example 4 | $La_{0.693}Sm_{0.069}Zr_{0.008}$ $Mg_{0.23}Ni_{3.47}Al_{0.10}$ | 90.0 | 0.126 | 0.076 |
| Example 5 | $La_{0.693}Sm_{0.069}Zr_{0.008}$ $Mg_{0.23}Ni_{3.60}Al_{0.10}$ | 90.0 | 0.198 | 0.115 |
| Comparative Example 1 | $Nd_{0.88}Zr_{0.n01}Mg_{0.110}Ni_{3.23}Al_{0.17}$ | 0 | 0.157 | 0.104 |
| Comparative Example 2 | $La_{0.269}Sm_{0.619}Zr_{0.009}$ $Mg_{0.103}Ni_{3.23}Al_{0.17}$ | 30.3 | 0.160 | 0.097 |

[Table 2] continued

| | Composition | Pre-storage capacity A of battery [mAh] | Low-temperature discharge retention rate C after high-temperature storage (after 180 days at 60°C) [%] |
|---|---|---|---|
| Example 1 | $La_{0.763}Mg_{0.237}Ni_{3.30}Al_{0.10}$ | 1007 | 64 |
| Example 2 | $La_{0.675}Sm_{0.067}Zr_{0.008}$ $Mg_{0.25}Ni_{3.47}Al_{0.10}$ | 1011 | 67 |
| Example 3 | $La_{0.72}Sm_{0.072}Zr_{0.008}$ $Mg_{0.20}Ni_{3.47}Al_{0.10}$ | 1002 | 73 |
| Example 4 | $La_{0.693}Sm_{0.069}Zr_{0.008}$ $Mg_{0.23}Ni_{3.47}Al_{0.10}$ | 1014 | 76 |
| Example 5 | $La_{0.693}Sm_{0.069}Zr_{0.008}$ $Mg_{0.23}Ni_{3.6}Al_{0.10}$ | 1010 | 88 |
| Comparative Example 1 | $Nd_{0.88}Zr_{0.01}Mg_{0.110}Ni_{3.23}Al_{0.17}$ | 992 | 33 |
| Comparative Example 2 | $La_{0.269}Sm_{0.619}Zr_{0.009}$ $Mg_{0.103}Ni_{3.23}Al_{0.17}$ | 990 | 31 |

(2) Consideration

From the results of Table 2, it was found that in Examples 1 to 5, the value of the low-temperature discharge retention rate C after the high-temperature storage was higher than that of Comparative Examples 1 and 2, and deterioration in the discharge characteristics after storage in a high-temperature environment was inhibited.

From these results, it can be seen that a nickel hydrogen secondary battery including a negative electrode containing a hydrogen storage alloy represented by the general formula: $Ln_{1-a}Mg_aNi_{b-c}Al_c$ (where Ln represents one or more elements selected from rare earth elements, Y, and Zr, and the subscripts a, b, and c satisfy the relationships of $a \leq 0.30$, $3.4 \leq b \leq 3.7$, and $c \leq 0.25$, respectively) as in Examples 1 to 5, in which Ln in the above-described general formula is at least La among the rare earth elements, and La accounts for 89.0 mol% or more of Ln, can inhibit deterioration in discharge characteristics after storage under a high-temperature environment as compared with a nickel hydrogen secondary battery including a negative electrode containing a hydrogen storage alloy not containing La or containing La in an amount of less than 89.0 mol% of Ln as in Comparative Examples 1 and 2.

It is considered that this is because the hydrogen storage alloy represented by the above-described general formula, in which La accounts for 89.0 mol% or more of Ln, is hardly corroded even when being in contact with the alkaline electrolyte solution in the nickel hydrogen secondary battery in a high-temperature environment, and the formation of a passive film is inhibited. Therefore, it is considered that the nickel hydrogen secondary battery including the negative electrode containing the hydrogen storage alloy can sufficiently cause a battery reaction even when the nickel hydrogen secondary battery is stored in a high-temperature environment and then placed in a low-temperature environment, and can obtain an effect of inhibiting deterioration in low-temperature discharge characteristics.

In addition, from the results of Table 2, it can be found that in Examples 2 to 5 in which the hydrogen storage

pressure Pa is 0.07 MPa or more and the hydrogen release pressure Pd is 0.04 MPa or more, the value of the low-temperature discharge retention rate C after high-temperature storage is higher than that in Example 1 in which the hydrogen storage pressure Pa is less than 0.07 MPa and the hydrogen release pressure Pd is less than 0.04 MPa, and the effect of inhibiting the deterioration in the low-temperature discharge characteristics is more exhibited. From this, it can be said that the nickel hydrogen secondary battery including the negative electrode containing the hydrogen storage alloy in which La accounts for 89.0 mol% or more of Ln, the hydrogen storage pressure Pa is 0.07 MPa or more, and the hydrogen release pressure Pd is 0.04 MPa or more can further exhibit the effect of inhibiting the deterioration in the discharge characteristics after storage in a high-temperature environment.

REFERENCE SIGNS LIST

2 Nickel hydrogen secondary battery
22 Electrode group
24 Positive electrode
26 Negative electrode
28 Separator

## Claims

**1.** A hydrogen storage alloy represented by a general formula: $Ln_{1-a}Mg_aNi_{b-c}Al_c$ (where Ln represents one or more elements selected from rare earth elements, Y, and Zr, and subscripts a, b, and c satisfy relationships of $a \leq 0.30$, $3.4 \leq b \leq 3.7$, and $c \leq 0.25$, respectively),

wherein at least La among the rare earth elements is selected as the Ln, and
the La accounts for 89.0 mol% or more of the Ln.

**2.** The hydrogen storage alloy according to claim 1, wherein in a pressure-composition-temperature characteristic of the hydrogen storage alloy showing a relationship among a hydrogen storage amount represented by H/M, which is a ratio of the number H of atoms of hydrogen in the hydrogen storage alloy to the total number M of atoms of elements constituting the hydrogen storage alloy, a hydrogen storage pressure which is an equilibrium hydrogen pressure in a hydrogen storage process, and a hydrogen release pressure which is an equilibrium hydrogen pressure in a hydrogen release process under a temperature condition of 80°C, the hydrogen storage pressure at a time point when the H/M = 0.4 is 0.07 MPa or more and a hydrogen release pressure at the time point when the H/M = 0.4 is 0.04 MPa or more.

**3.** A negative electrode for a nickel hydrogen secondary battery, the negative electrode comprising the hydrogen storage alloy according to claim 1 or 2.

**4.** A nickel hydrogen secondary battery comprising:

a container; and
an electrode group housed in the container together with an alkaline electrolyte solution,
wherein the electrode group includes a positive electrode and a negative electrode overlapped with each other via a separator, and
the negative electrode is the negative electrode according to claim 3.

FIG. 1

18
20
11
2
14
37
12
16
30
32
39
22
10
35
34
26
28
24

**INTERNATIONAL SEARCH REPORT**

International application No. **PCT/JP2023/036481**

**A. CLASSIFICATION OF SUBJECT MATTER**

***C22C 19/00***(2006.01)i; ***H01M 4/38***(2006.01)i
FI: C22C19/00 F; H01M4/38 A

According to International Patent Classification (IPC) or to both national classification and IPC

**B. FIELDS SEARCHED**

Minimum documentation searched (classification system followed by classification symbols)

C22C19/00; H01M4/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-52728 A (JAPAN METALS & CHEM CO., LTD.) 04 April 2022 (2022-04-04) paragraph [0068] | 1, 3-4 |
| A | paragraph [0068] | 2 |
| X | JP 2022-52729 A (JAPAN METALS & CHEM CO., LTD.) 04 April 2022 (2022-04-04) paragraph [0082] | 1, 3-4 |
| A | paragraph [0082] | 2 |
| X | WO 2023/047726 A1 (JAPAN METALS & CHEM CO., LTD.) 30 March 2023 (2023-03-30) paragraph [0102] | 1, 3-4 |
| A | paragraph [0102] | 2 |
| X | WO 2021/205749 A1 (JAPAN METALS & CHEM CO., LTD.) 14 October 2021 (2021-10-14) paragraph [0064] | 1, 3-4 |
| A | paragraph [0064] | 2 |
| X | JP 2011-127185 A (SANTOKU CORPORATION) 30 June 2011 (2011-06-30) paragraphs [0034]-[0035], [0041] | 1-4 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/036481**

| Patent document cited in search report | Publication date (day/month/year) | Patent family member(s) | Publication date (day/month/year) |
|---|---|---|---|
| JP 2022-52728 A | 04 April 2022 | (Family: none) | |
| JP 2022-52729 A | 04 April 2022 | (Family: none) | |
| WO 2023/047726 A1 | 30 March 2023 | (Family: none) | |
| WO 2021/205749 A1 | 14 October 2021 | US 2023/0076463 A1<br>paragraph [0106]<br>CN 114946051 A | |
| JP 2011-127185 A | 30 June 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001307721 A